# EUROPEAN PATENT SPECIFICATION

(11) **EP 1 761 133 B1**
(45) Date of publication and mention of the grant of the patent: **21.12.2011**
(21) Application number: 05750594.3
(22) Date of filing: 10.06.2005
(51) Int. Cl.: A23K 1/00, A23K 1/16

(54) **ANTIMICROBIAL ACIDIFYING FEED PRODUCT AND METHOD OF ITS PRODUCTION**
ANTIMIKROBIELLES SÄUERNDES FUTTERMITTEL UND VERFAHREN ZU SEINER HERSTELLUNG
PRODUIT ALIMENTAIRE ACIDIFIANT ANTIMICROBIEN ET SON PROCEDE DE PRODUCTION

(30) Priority: 30.06.2004 SE 0401672
(43) Date of publication of application: 14.03.2007
(73) Proprietor: Kemira GrowHow AB, 251 09 Helsingborg (SE)
(72) Inventor: JANSSON, Nils, S-252 49 Helsingborg (SE); HERMANSSON, Jan, S-252 70 Råå (SE); NILSSON, Bernt, S-252 32 Helsingborg (SE)
(74) Representative: Saijonmaa, Olli-Pekka
(86) International application number: PCT/SE2005/000868
(87) International publication number: WO 2006/004481

(56) References cited:
- WO-A1-97/07687
- WO-A1-2004/006689
- FR-A1- 2 368 228
- US-A1- 2002 086 090

## Description

### Field of the invention

The present invention relates to the field of feed applications. More specifically, the present invention relates to a coated, antimicrobial acidifying feed product and methods of its production.

### Background of the invention

Organic acids and their salts are commonly replacing the use of nontherepeutic antibiotics in animal production programs. The addition of organic acids to animal diets have been shown to offer many advantages such as lowered digesta pH and increased pancreatic secretion in the animal resulting in improved protein and energy digestibility, which is especially important for weaning piglets having insufficient production of hydrochloric acid and lactic acid by the stomach. Further advantages are positive effects on the gastrointestinal mucosa, antimicrobial effects in feed, offering feed hygiene, and antimicrobial effects in the gastrointestinal tract resulting in an increased availability of dietary energy and nutrients to the host animal.

Examples of organic acids and their salts favoured in the animal industry include formic acid, acetic acid, propionic acid, sorbic acid, benzoic acid, butyric acid, lactic acid and the inorganic phosphoric acid.

Many trials studying the effect of different levels of different organic acids on the growth performance of animals have been performed. Øverland et al. (J. Anim. Sci. 2000, 78:1875-1884) discloses a trial evaluating the effect of 0.6, 0.8 and 1.2 % Potassium diformate in diets for growing-finishing pigs. The results showed that at least 0.8% Potassium diformate was needed for a significant effect.

Roth et al. (Agribiol. Res. 1996, 49(4):307-317) used formulations of a combination of formic acid and formates (total acid content 70-80%) which were tested for their efficacy on growth performance of pigs. The tested products where added at 0.65%, 1.30% and 1.95%. Only 1.95% produced a significant growth response. Feed conversion was effective at product inclusion levels of 1.30% and 1.95%.

Partanen et al. (Animal Feed Sci.& Tech. 2001, 93:137-155) used 0.85% formic acid and an inclusion level of 8g/kg feed (0.8%) in a pig study that resulted in a significantly improved apparent ileal digestibility of several amino acids from a high fibre diet.

Roth and Raczek (Feed magazine, 2003 (4), p.105-110) studied different levels of sorbic acid on feed conservation and growth performance of pigs. 0.05% sorbic acid was enough to suppress mould and fungi in animal feed while 0.55% and 1% sorbic acid increased growth rates with 7 and 16% respectively. The feed conversion rate was however only slightly improved in the dose stage 1.0% sorbic acid.

A disadvantage with the use of organic acids as feed acidifiers in thus the high doses needed so that their usefulness is limited by their high cost. Further disadvantages of some of the efficient organic acids are their corrosive nature and unpleasant odours.

US 2002/0086090 discloses a solid preparation of mixed acids. The acids for the mixture is sorbic acid and at least one organic acid in liquid state and at least one organic acid in a solid state, at room temperature. The mixture is a pure mixture of acids, i.e. no chemical reaction occurs between the acids and no coating is formed. The liquid acid may be admixed directly with the solid acids or after being adsorbed onto a carrier.

WO 9707687 discloses granules consisting of a core material of a porous carrier and an organic acid and a coating material that may be selected from organic acids. In the comparative example 2 silica material is mixed with an acid mixture of two organic acids, i.e. formic acid and propionic acid, forming an uncoated absorbate product. In example 3 a silica material is mixed with formic acid and coated with a melt of citric acid having a lower pKa-value than formic acid.

WO 2004006689 discloses a coated preparation comprising a core of a salt of formic acid (diformate). The coating material may be selected from fatty acids, organic acids or derivates thereof etc. The preparation may further comprise further ingredients and/or additives such as organic acids. No hints or examples are given in the document to combine the constituents according to the present invention.

### Objects of the invention

An object of the present invention is to provide a new and improved acidifying product, which is effective at low inclusion levels in the animal diet.

A second object of the invention is to provide a product with a high antimicrobial effect.

A third object is to provide a method for producing an antimicrobial acidifying product.

A fourth object of the invention is to provide a new and improved type of coating for solid acidifying additives and a method for its production.

A fifth object of the invention is to provide a solid acidifying additive with a controlled-release of the acid.

A sixth object of the invention is to provide an antimicrobial feed acidifier compatible with a premix.

### Summary of the invention

It has now been found that these objects may be obtained with the antimicrobial acidifying feed product and methods according to the invention.

The feed product according to the invention thus comprises a core and a coating, the core comprising a porous carrier and at least one acid and the coating comprising at least one organic acid or a salt, ester or glyceride of said acid(s), wherein the pKa-value of at least one acid in the core is lower than the pKa-value of at least one organic acid in the coating.

The feed product may be produced according to the following method comprising: providing a carrier and adding said carrier with at least one core acid and a water solution of a salt of at least one organic coating acid, an ester or a glyceride of said acid(s); wherein the pKa-value of at least one core acid is lower than the pKa-value of at least one organic acid in the coating.

### Detailed description of the invention

The present invention relates to the use of at least one acid in a carrier forming a core in combination with at least one organic acid, or a salt, ester or glyceride of said acid(s) in a coating surrounding said core, wherein the pKa-value of at least one acid in the core is lower than the pKa-value of at least one organic acid in the coating.

A theory is that by covering a core comprising a carrier and at least one strong acid(s) with a coating of at least one weak organic acid or a salt, ester or glyceride of said acid, the antimicrobial effect of the organic acid, its salt, ester or glyceride in the coating is boosted by a continuous supply of stronger acid (H⁺-ions) from the core. A particulate shape of the product, resulting in a large surface, may further enhance the antimicrobial effect of the product.

The pKa-value of the stronger core acid is preferably <4 and the pKa-value of the weaker organic coating acid is preferably >4.

The core acid is preferably chosen from, or a combination of, phosphoric acid (pKa=2.15), formic acid (pKa=3.75), lactic acid (pKa=3.82), citric acid (pKa=3.13) and fumaric acid (pKa=3.02).

The organic coating acid (or a salt, an ester or a glyceride of said acid) is preferably chosen from, or a combination of, butyric acid (pKa=4.82), sorbic acid (pKa=4.76), benzoic acid (pKa=4.19), adipic acid (pKa=4.43), and the weak acids capric and caparic acid.

The core of the feed product according to the invention may comprise different acids as long as at least one of these acids has a pKa-value that is lower than the pKa-value of at least one of the organic coating acids.

The core may preferably, in addition to at least one acid, contain a salt such as diformiate. The pH of the core is however, due to the content of an acid, always acidic. The pH of the core is preferably less than 4.

In one embodiment of the invention the core is free from diformiate.

The coating of the feed product according to the invention may comprise different organic acids, salts, esters or glycerides of said acid(s) as long as the pKa-value of at least one of these organic acids has a pKa-value that is higher than the pKa-value of at least one core acid.

The feed product according to the invention preferably comprise 30-60% by weight carrier, 10-70% by weight of core acid and 2-10% by weight of coating acid.

The coating may further comprise at least one fatty acid(s), preferably at least one long chain fatty acid(s). The fatty acids may be chosen from all commercial C₁₀-C₂₄ fatty acids, preferred acids are stearic acid and palmitic acid.

The carrier in the core of the feed product according to the invention may be a porous organic or inorganic material with a capacity to absorb acids into its pores.

A preferred carrier for the feed product according to the invention is diatomaceous earth. A preferred particle size of the diatomaceous earth is 50-1000 µm.

The particle size of the feed product according to the invention is preferably 0.05-2.0 mm, preferably 0.2-1.5 mm.

The coating according to the invention may have an essentially tight and compact structure. However, a preferred coating according to the invention has a more or less porous structure enabling acid from the core of the product to diffuse through the coating allowing for a sustained release of the strong acid from the core of the product.

The porosity of the coating according to the invention may be adjusted according to the used acids in the product and the conditions where the product is to be used.

The porosity of the coating is preferably 0.2-2 µm.

The product according to the invention may optionally be ammoniated.

The product according to the invention may be part of a premix further containing vitamins, trace minerals and other additives.

The antimicrobial acidifying feed product according to the invention may be produced according to the following method: providing a carrier; adding said carrier with at least one core acid and an organic coating acid, or a salt, ester or glyceride of said acid(s); wherein the pKa-value of at least one core acid is lower than the pKa-value of at least one organic acid in the coating.

The at least one core acid and at least one organic acid in the coating, or a salt, ester or glyceride of said organic acid(s) may be in liquid or powder form and the application may be by mixing and/or spraying. The at least one organic coating acid or a salt, ester or glyceride of said acid(s) may be applied as a water solution, weak acid solution or a melt and optionally in admixture with at least one long chain fatty acid(s) and optionally on a heated carrier.

In the following description of different embodiments of the method according to the invention the pKa-value of at least one core acid is lower than the pKa-value of at least one organic coating acid.
1. According to a first embodiment a carrier is provided and said carrier is added with at least one core acid and a water solution of a salt of at least one organic coating acid, an ester or a glyceride of said acid(s)
1A. The carrier is added with at least one acid to form a core and then a water solution of a salt of at least one organic coating acid, an ester or a glyceride is added to the core.

When applied to the core, the cation of the acid salt from the organic acid with a higher pKa-value will react with the anion of the core acid with a lower pKa-value, which will result in a coating comprising two components on the surface of the core, i.e. one component which is a salt of the stronger core acid and one component which is a weak solid organic acid.

The water solution of the salt of the at least one organic coating acid, or ester or glyceride of said acid(s), is preferably applied to the core by spraying and the water solution is preferably of ambient temperature, more preferably 15-60°C.

The concentration of the salt in the water solution is preferably at least 30% by weight.

The coating solution is preferably prepared of a water solution of a salt selected from potassium sorbate, sodium benzoate and sodium palmitate.
1B. A water solution of a salt of at least one organic coating acid, an ester or a glyceride of said acid(s) is premixed with at least one core acid. An immediate reaction forms a precipitate in the solution resulting in a suspension. The suspension is added to the carrier, preferably by spraying, forming a porous coating on the carrier.
1C. A water solution of a salt of at least one organic coating acid, an ester or a glyceride of said acid and at least one core acid are added to the carrier separately and simultaneously, preferably by spraying.
2. According to a second embodiment a carrier is provided and added with at least one core acid and at least one organic coating acid, or a salt, ester or glyceride of said acid(s) and at least one fatty acid.
2A. Providing a carrier; adding said carrier with at least one core acid forming a core; applying a melted blend of at least one fatty acid and at least one organic coating acid, a salt, ester or glyceride of said acid to the core.

This method of application is especially suitable for sorbic, benzoic, capric and caparic acid.
2B. Providing a carrier; adding said carrier with at least one core acid forming a core; applying a melt of at least one fatty acid to the core and then the at least one organic coating acid, a salt, ester or glyceride of said acid, is applied as a powder to the core before the fatty acid solidify.

This method of application is especially suitable for calcium butyrate, benzoic acid and sorbic acid.
2C. Providing a carrier; adding said carrier with at least one core acid forming a core; heating the core; applying at least one fatty acid and at least one organic coating acid, a salt, ester or glyceride of said acid as a powder mixture onto the core.
2D. Providing a carrier; adding said carrier with at least one acid forming a core; heating the core and at least one fatty acid; applying at least one coating acid, or a salt, ester or glyceride of said acid(s) as a powder onto the fatty acid coated core before the fatty acid solidifies.
3. According to a third embodiment of the method according to the invention a carrier is provided and mixed with a powder of at least one organic coating acid, a salt, ester or glyceride of said acid and then at least one core acid is applied to the carrier in liquid form in the presence of water, preferably by spraying whereby a coating is formed.
4. According to a fourth embodiment a carrier is provided and added with a suspension, formed by mixing at least one solid organic coating acid, ester or glyceride, having a low solubility in water and acid, and at least one liquid core acid, which suspension is sprayed onto the carrier.

### Detailed description of the figures

Figure 1a shows the coated particle of example 1 with a coating of sorbic acid (SEM,200X).
Figure 1b shows network of sorbic acid crystals in the coating of example 1 formed by reaction between potassium sorbate and formic acid (SEM,1000X).
Figure 2 shows the coated particle of example 2 with a coating of sorbic acid in a palmitic acid melt (SEM, 100X).
Figure 3 shows the coated particle of example 3 with a coating of stearic acid and benzoic acid (SEM, 200X).
Figure 4 shows the effects of a feed product according to the invention at different feed rates on the growth performance of fattening pigs.

The following examples and drawings merely serve to illustrate the present invention and are not meant to be limiting in any manner.

### Example 1

This example demonstrates the coating of a core using a water solution of a salt of an organic acid with a pKa>4.

10 kg of diatomaceous earth are initially taken in a Pascal tumbling mixer and impregnated with 7,5 kg of ammonified formic acid (pKa=3.75), and then while still tumbling, a solution of water (0,47 kg) and potassium sorbate (0,47 kg, pKa of sorbic acid=4.76) are sprayed onto the impregnated diatomaceous earth.
The solution is readily taken up by the impregnated diatomaceous earth and a reaction with the formic acid takes place and a loose free flowing product is formed with a coating of sorbic acid.

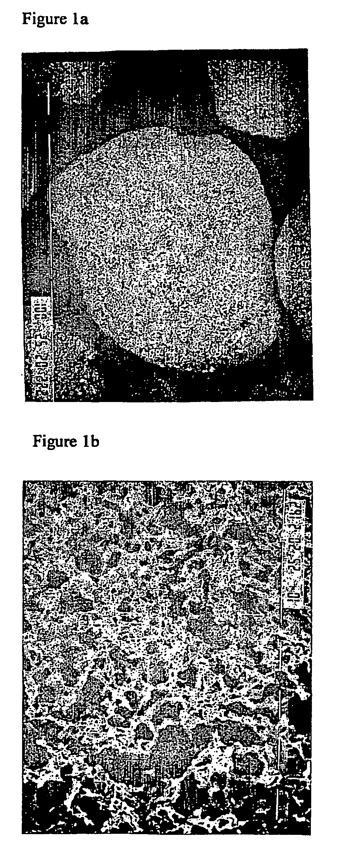

The resulting coated particle is shown in figure la and the sorbic acid crystals in the coating is shown in figure 1b The product according to this example was used in example 4, 6 and 7.

### Example 2

This example demonstrates the coating of a core using a melt of a fatty acid, after which it is coated with a powder of an organic acid with a pKa>4.

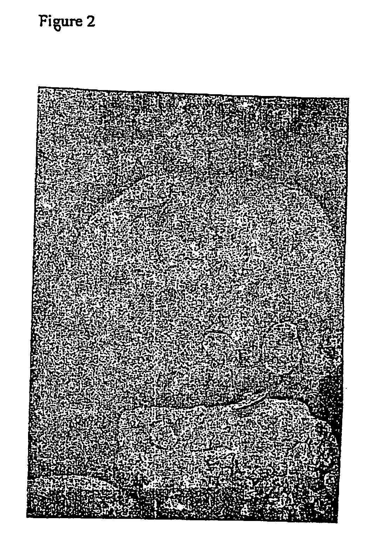

280 g of diatomaceous earth are impregnated with 250 g of hot (90°C) phosphoric acid (77%, pKa=2.15) in a household mixer while heating the mixer bowl externally with heated air. When the bed temperature has risen to approximately 70°C, melted fatty acid (palmitic acid 80°C, 52g) is sprayed onto the impregnated diatomaceous earth. After approximately 3 minutes of tumbling, while the temperature is kept above the solidifying limit of the fatty acid, the bed is powdered with sorbic acid (18 g, pKa=4.76), which is embedded in the fatty acid layer. The heating is turned off and the bed is kept tumbling during the cooling period. Cooling of the bed to a temperature of approximately 45°C gives a free flowing product coated with sorbic acid. A coated particle according to this example is shown in figure 2.

### Example 3

This example demonstrates the coating of a core using a melt of a fatty acid and an organic acid with a pKa>4.

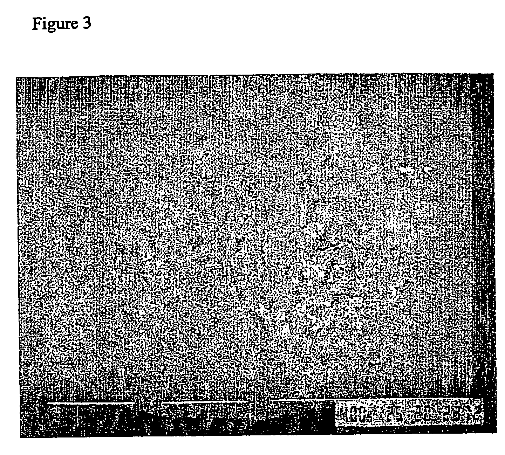

A mixture of 570 g of diatomaceous earth and 10 g of fumaric acid (pKa=3.02) are impregnated with a hot (90°C) mixture of 300 g of lactic acid (80%, pKa=3.82) and 90 g of phosphoric acid (77%, pKa=2.15) in a household mixer. The bed is externally heated, as described in example 2, until the temperature reach approximately 80°C and the lactic acid content is approximately 26%. 100g of a hot melt (85°C) containing 75% of fatty acid (stearic acid) and 25% of benzoic acid (pKa=4.19), is sprayed onto the tumbling bed. The heating is turned off and the bed is kept tumbling during the cooling period. Cooling of the bed to a temperature of approximately 38°C gives a free flowing coated product. A coated particle according to this example is shown in figure 3.

### Example 4

This example demonstrates the acid evaporation from products according to the invention compared with uncoated absorbate products of which product A and E are ammoniated.

The tested products and the results from the acid release test are shown in table 1.

A temperature-controlled airflow of 100 1/h ±10%, at 20.0°C ±1°C was led through a resin flask with a diameter of 50 mm, containing a sample of 100 ml. The test temperature was maintained at 20°C ±1.0°C. The volume of air was measured by a flow meter. The sample was exposed to the airflow from the central glass tube placed 30 mm above the test surface. The acid fumes carried by the air current were trapped in the absorption solution in a resin flask containing -150 ml >2% sodium formate solution with phenolphthalein as indicator. The solution was first titrated to form a colour change (red) with 1.0-n NaOH. After ten minutes absorption, the solution was titrated back to red. This procedure was repeated three times with the same sample. The results are shown as an average value of the three titrations. The value of evaporated acids is shown as gram formic acid/m³ air irrespective of the contents of other acids.

**Table 1**

| Product | Coating | Acid release (g/m³) | Reduction (%) |
|---|---|---|---|
| A | Uncoated, ammoniated (10%) formic absorbate product | 3.0 | |
| B | Product A coated with 1.86% sorbic acid (from example 1) | 2.0 | 33 |
| C | Uncoated, formic acid absorbate | 11.7 | |
| D | Product C coated with 3.86% sorbic acid | 5.0 | 57 |
| E | Uncoated, ammoniated (7%) formic absorbate product | 6.6 | |
| F | Product E coated with 2% sorbic acid/palmitic acid | 3.4 | 48 |

The ammoniated uncoated products A and E show a lower acid release than the uncoated product C. The coating of the products reduced the release of strong core acid with 33-57%. Product C has got a thicker sorbic acid coating than product B that results in a higher reduction of the acid release. To reduce the amount of sorbic acid needed in the product a fatty acid (palmitic acid) may be added as shown with product E in table 1.

### Example 5

This example demonstrates the vitamin stability of a feed premix comprising antimicrobial acidifying products according to the invention.

The study was undertaken as free phosphoric acid from acidifying products may react with vitamin A during storage of a feed premix.

The products according to the invention contained a core of diatomaceous earth and phosphoric acid and a coating according to A, B or C in table 2. Product A was uncoated, product B was produced by applying a 50% water solution of potassium sorbate to the core and product C by applying a mixture of a melt of a fatty acid (palmitic acid) and sorbic acid. Each feed premix contained vitamins, trace minerals and 70% by weight of one of the products A-C in table 2.

**Table 2**

| Product | Coating | Stability of Vitamin A in the premix after 2 month |
|---|---|---|
| A | Uncoated phosphoric acid absorbate | -65% |
| B | Product A coated with 4% sorbic acid | stable |
| C | Product A coated with 1.05% sorbic acid in combination with a fatty acid coating | stable |

The coating of the product according to the invention effectively prevents acid release from the products as shown in table 2.

### Example 6

This example demonstrates the antimicrobial effect of a product according to the invention on the 48 hours survival of *Salmonella typhimurium* in poultry feed.

One kilo of meal was artificially contaminated with *Salmonella typhimurium* and homogenously mixed to ensure a homogenous distribution of the organism in the meal.
1) 200 g of the contaminated meal was treated with a feed product according to the invention comprising a core of diatomaceous earth and formic acid and a coating of 1.86% sorbic acid (product from example 1).
2) A second sample of 200 g contaminated meal was treated with liquid formic acid/propionic acid.
3) A third sample of 200 g contaminated meal was treated with liquid formic acid absorbed onto a silica carrier.
4) 200g of meal was kept untreated as a reference.

The samples were stored in a closed container at room temperature and assayed at intervals for the contaminating organism (*Salmonella typhimurium*). Standard methods used for routine analysis where used for the recovery of the organism. A meal sample was added to buffered peptone water and mixed thoroughly. The supernatant was spread onto Brilliant Green Agar (BGA), incubated and checked for growth of colonies.

The inclusion rate for the different samples 1-4 and the results of the test are shown in table 3 and 4.

**Table 3**

| Inclusion rate (%) | A)Antimicrobial effect (% survival) B)Content of acid anion (%) | | | | | | | |
|---|---|---|---|---|---|---|---|---|
| | 1) Anti-microbial coated product | | 2)Liquid | | 3) Silica | | 4)Untreated | |
| | A | B | A | B | A | B | A | B |
| 0.2 | 61.2 | 0.08 | 60 | 0.18 | 61.6 | 0.12 | 81.6 | - |
| 0.4 | 13.2 | 0.15 | 12.3 | 0.36 | 13.2 | 0.23 | 81.6 | - |
| 0.6 | 9.1 | 0.23 | 8.5 | 0.54 | 9.4 | 0.35 | 84.7 | - |
| 0.8 | 7.2 | 0.31 | 6.8 | 0.72 | 8.0 | 0.46 | 84.7 | - |
| 1.0 | 5.1 | 0.38 | 3.9 | 0.90 | 6.2 | 0.58 | 84.7 | - |

An acid anion concentration of about 0.4% results in 5% survival using the coated product according to the invention and 12% survival using liquid acid, as shown in table 3.

The samples treated with the feed product according to the invention, at a low inclusion level, comprising a core of diatomaceous earth and formic acid and a coating of sorbic acid, showed a higher reduction of Salmonella typhimurium at a lower inclusion rate of acid anion than the samples treated with liquid formic acid and formic acid absorbed onto a silica carrier (table 3 and 4).

**Table 4**

| | 1) Anti-microbial coating | 2) Liquid | 3)Silica | 4)Untreated control |
|---|---|---|---|---|
| Acid anion in product. (%) | 38.2 | 90.4 | 57.9 | 0 |
| Acid anion as sorbic acid (%) | 1.86 | 0 | 0 | 0 |
| Reduction (%) | 90.9 | 91.5 | 90.6 | 15.3 |
| Needed inclusion rate of acid anion (%) | 0.23 | 0.45 | 0.35 | |

### Example 7

This example demonstrates the effects of the feed product according to the invention on the performance of grower/finisher pigs.

The dose effects of an antimicrobial acidifying feed product according to the invention were compared with basal diets with/without growth promoter in fattening pigs, starting at about 21 kg live weight and finishing at slaughter at 105 kg live weight. The two basal diets (grower and finisher) contained the following additives:
1. Control feed without growth promoter.
2. Avilamycin (Maxus^{®}) (an antibiotic) at 40 g/ton, used only in the grower phase (from about 21 to 54 kg LW)
3. Inventive product (ex 1) at an in feed rate of 0.3%.
4. Inventive product (ex 1) at an in feed rate of 0.6%.
5. Inventive product (ex 1) at an in feed rate of 1.2%.

The inventive product contained a core of a diatomaceous earth carrier and formic acid and a sorbic acid coating, produced by the liquid potassium sorbate method of example 1. The concentration of anions from formic acid and the concentration of sorbic acid for the inventive products 3-5 above are shown in table 5.

**Table 5.**

| Product of example 1 | In feed rate (%) | | |
|---|---|---|---|
| | ³⁾ 0.3 | ⁴⁾ 0.6 | ⁵⁾ 1.2 |
| As anion (%) | 0.11 | 0.23 | 0.46 |
| As sorbic acid (%) | 0.0056 | 0.0112 | 0.0223 |

Finnish Landrace x Yorkshire pigs were used in the experiment, 4 pigs per pen, 10 pens per treatment. Feeding was equal for all treatments, restricted to about 85 % ad libitum. Diet compositions and nutrient specifications are given in Table 6.

**Table 6. Feed formulations.**

| Ingredients (%) | Grower diet | Finisher diet |
|---|---|---|
| Barley | 59.63 | 64.86 |
| Oats | 20.00 | 20.00 |
| Soybean meal | 17.64 | 12.60 |
| Limestone | 0.72 | 0.69 |
| Mono-Calcium-Phosphate | 0.57 | 0.45 |
| Vitamin premix | 1.30 | 1.30 |
| L-Lysine HCl | 0.12 | 0.1 |
| L-Threonine | 0.02 | - |

| Nutrient specification | | |
|---|---|---|
| NE (MJ/kg) | 8.6 | 8.1 |
| Crude protein (%) | 17 | 15.2 |
| Feed Units/kg | 0.93 | 0.94 |
| P (g/FU) | 6.0 | 5.5 |
| Ca (total) (g/FU) | 7.5 | 7.0 |

| | | |
|---|---|---|
| Feed Units (FU) equal 9.3 MJ/NE | | |

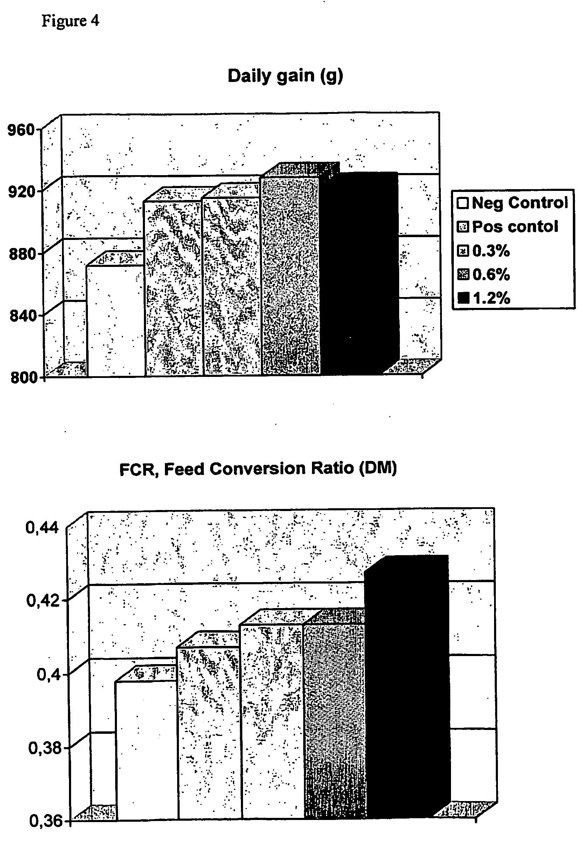

Results are shown in table 7 and figure 4.

**Table 7. Performance of the pigs during the different phases of the trial**

| Treatment: | Control | Avilamycin | 0.3% | 0.6% | 1.2% |
|---|---|---|---|---|---|
| Daily Gain (g/d) | | | | | |
| Grower phase | 758 | 810 | 781 | 818 | 761 |
| Finisher phase | 957 | 987 | 1019* | 1017* | 1043* |
| Total fattening | 872 | 911 | 915 | 928* | 921* |
| Days to slaughter | 96.5 | 93.4 | 92.6 | 90.3* | 92.8 |

| Feed intake (kg DM/pig) | | | | | |
|---|---|---|---|---|---|
| Grower phase | 1.52 | 1.56 | 1.56 | 1.60 | 1.51 |
| Finisher phase | 2.61 | 2.72 | 2.66 | 2.74* | 2.61 |
| Total fattening | 2.16 | 2.22 | 2.18 | 2.23 | 2.13 |
| Feed DM:Gain | | | | | |
| Grower phase | 2.01 | 1.93 | 2.01 | 1.96 | 1.99 |
| Finisher phase | 2.82 | 2.79 | 2.66* | 2.73 | 2.53*^{#} |
| Total fattening | 2.51 | 2.46 | 2.42 | 2.42 | 2.34*^{#} |

| Malicious (grade 2-3) alterations in the oesophageal region at slaughter | | | | | |
|---|---|---|---|---|---|
| (% of pigs) | 21.7 | 10.7 | 22.2 | 9.1 | 3.3 |

| | | | | | |
|---|---|---|---|---|---|
| *Significant difference from control treatment according to Dunnett test (P<0.05) ^{#}Significant difference from Avilamycin treatment according to Dunnett test (P<0.05); Avilamycin only added in the grower phase. | | | | | |

The inventive product had no negative effect on gastric lesions and tended to reduce malicious alterations in the oesophageal region.

The tested product according to the invention significantly improved the growth performance of grower-finisher pigs even at the lowest inclusion level, i.e. 0.3% comprising 0.11% acid anions, and higher inclusion levels further enhanced the response. 0.11 % acid anions may be compared with Partanen et al. (Animal Feed Sci.& Tech. 2001, 93:137-155) which used a 6 times larger acid ion content to obtain the effect according to the present invention (0.85% formic acid and an inclusion level of 0.8%, gives an acid anion content of about 0.68%).

## Claims

1. Antimicrobial acidifying feed product comprising a core and a coating, the core comprising a porous carrier and at least one acid and the coating comprising at least one organic acid or a salt, ester or glyceride of said acid(s), wherein the pKa-value of at least one core acid is lower than the pKa-value of at least one organic coating acid.

2. Product according to claim 1, wherein the at least one core acid is stronger than at least one organic coating acid.

3. Product according to claim 1 or 2, wherein the pKa-value of the core acid is < 4.

4. Product according to any one of claims 1-3,
wherein the pKa-value of the organic coating acid is > 4.

5. Product according to any one of claims 1-4,
wherein the organic coating acid is chosen from, or is a combination of butyric acid, sorbic acid, benzoic acid, adipic acid, capric and caparic acid.

6. Product according to any one of claims 1-5,
wherein the core acid is chosen from, or is a combination of phosphoric acid, formic acid, lactic acid, citric acid and fumaric acid.

7. Product according to any one of claims 1-6,
wherein the product comprises 30-60 % by weight of carrier, 10-70 % by weight core acid and 1-10 % by weight of organic acid in the coating.

8. Product according to any one of claims 1-7,
wherein the coating further comprises at least one fatty acid, preferably a long chain fatty acid(s).

9. Product according to any one of claims 1-8,
wherein the carrier is diatomaceous earth.

10. Product according to any one of claims 1-9,
wherein the pH of the core is less than 4.

11. Method of producing an antimicrobial acidifying feed product according to any of claims 1-10 comprising:
providing a carrier;
adding said carrier with at least one core acid and a water solution of a salt of at least one organic coating acid, an ester or a glyceride of said acid(s);
wherein the pKa-value of at least one core acid is lower than the pKa-value of at least one organic coating acid.

12. Method of producing an antimicrobial acidifying feed product according to any of claims 1-10 comprising:
providing a carrier;
adding said carrier with at least one core acid and at least one organic coating acid, or a salt, ester or glyceride of said acid(s) and at least one fatty acid;
wherein the pKa-value of at least one core acid is lower than the pKa-value of at least one organic coating acid.

13. Method of producing an antimicrobial acidifying feed product according to any of claims 1-10 comprising:
providing a carrier;
adding said carrier with a powder of at least one organic coating acid or a salt, ester or glyceride of said acid; and
adding at least one core acid in liquid form in the presence of water;
wherein the pKa-value of at least one core acid is lower than the pKa-value of at least one organic coating acid.

14. Method of producing an antimicrobial acidifying feed product according to any of claims 1-10 comprising:
providing a carrier;
adding said carrier with a suspension, formed by mixing at least one solid organic coating acid, ester or glyceride, and at least one liquid core acid;
wherein the pKa-value of at least one core acid is lower than the pKa-value of at least one organic coating acid.

15. Use of a product according to any of claims 1-10 for the preservation of animal feed.

16. Use of a product according to any of claims 1-10 to improve animal growth and feed utilisation.

17. A premix containing the product according to any of claims 1-10 and vitamins and trace minerals.

18. A product according to any of claims 1-10 for use in improving animal health.

## Patentansprüche

1. Antimikrobielles säuerndes Futtermittel, umfassend einen Kern und eine Beschichtung, wobei der Kern einen porösen Träger und mindestens eine Säure umfaßt, und die Beschichtung mindestens eine organische Säure oder ein Salz, einen Ester oder ein Glycerid der Säure(n) umfaßt, wobei der pKa-Wert mindestens einer Kernsäure niedriger als der pKa-Wert mindestens einer organischen Beschichtungssäure ist.

2. Produkt gemäß Anspruch 1, wobei die mindestens eine Kernsäure stärker als mindestens eine organische Beschichtungssäure ist.

3. Produkt gemäß Anspruch 1 oder 2, wobei der pKa-Wert der Kernsäure < 4 ist.

4. Produkt gemäß einem der Ansprüche 1 bis 3, wobei der pKa-Wert der organischen Beschichtungssäure > 4 ist.

5. Produkt gemäß einem der Ansprüche 1 bis 4, wobei die organische Beschichtungssäure ausgewählt ist aus oder eine Kombination ist von Buttersäure, Sorbinsäure, Benzoesäure, Adipinsäure, Caprinsäure und Caparinsäure.

6. Produkt gemäß einem der Ansprüche 1 bis 5, wobei die Kernsäure ausgewählt ist aus oder eine Kombination ist von Phosphorsäure, Ameisensäure, Milchsäure, Zitronensäure und Fumarsäure.

7. Produkt gemäß einem der Ansprüche 1 bis 6, wobei das Produkt 30 bis 60 Gew.-% Träger, 10-70 Gew.-% Kernsäure und 1-10 Gew.-% organischer Säure in der Beschichtung umfaßt.

8. Produkt gemäß einem der Ansprüche 1 bis 7, wobei die Beschichtung weiter mindestens eine Fettsäure umfaßt, vorzugsweise (eine) langkettige Fettsäure(n).

9. Produkt gemäß einem der Ansprüche 1 bis 8, wobei der Träger Diatomeenerde ist.

10. Produkt gemäß einem der Ansprüche 1 bis 9, wobei der pH des Kerns weniger als 4 beträgt.

11. Verfahren zur Herstellung eines antimikrobiellen säuernden Futtermittels gemäß einem der Ansprüche 1 bis 10, umfassend:
das Bereitstellen eines Trägers,
das Zugeben von mindestens einer Kernsäure und einer Wasserlösung eines Salzes von mindestens einer organischen Beschichtungssäure, einem Ester oder einem Glycerid der Säure(n) zu dem Träger,
wobei der pKa-Wert mindestens einer Kernsäure niedriger als der pKa-Wert mindestens einer organischen Beschichtungssäure ist.

12. Verfahren zur Herstellung eines antimikrobiellen säuernden Futtermittels gemäß einem der Ansprüche 1 bis 10, umfassend:
das Bereitstellen eines Trägers,
das Zugeben von mindestens einer Kernsäure und mindestens einer organischen Beschichtungssäure oder einem Salz, Ester oder Glycerid der Säure(n) und mindestens einer Fettsäure zu dem Träger, wobei der pKa-Wert mindestens einer Kernsäure niederiger als der pKa-Wert mindestens einer organischen Beschichtungssäure ist.

13. Verfahren zur Herstellung eines antimikrobiellen säuernden Futtermittels gemäß einem der Ansprüche 1 bis 10, umfassend
das Bereitstellen eines Trägers,
das Zugeben von einem Pulver mindestens einer organischen Beschichtungssäure oder einem Salz, Ester oder Glycerid der Säure zu dem Träger, und
das Zugeben mindestens einer Kernsäure in flüssiger Form in der Gegenwart von Wasser,
wobei der pKa-Wert mindestens einen Kernsäure niedriger als der pKa-Wert mindestens einer organischen Beschichtungssäure ist.

14. Verfahren zur Herstellung eines antimikrobiellen säuernden Futtermittels gemäß einem der Ansprüche 1 bis 10, umfassend
das Bereitstellen eines Trägers,
das Zugeben einer Suspension, gebildet durch Mischen mindestens einer festen organischen Beschichtungssäure, Ester oder Glycerid und mindestens einer flüssigen Kernsäure, zu dem Träger,
wobei der pKa-Wert mindestens einer Kernsäure niedriger als der pKa-Wert mindestens einer organischen Beschichtungssäure ist.

15. Verwendung eines Produkts gemäß einem der Ansprüche 1 bis 10 zur Konservierung eines Tierfutters.

16. Verwendung eines Produkts gemäß einem der Ansprüche 1 bis 10 zur Verbesserung des Tierwachstums und Futterverwendung.

17. Vormischung, enthaltend das Produkt gemäß einem der Ansprüche 1 bis 10 und Vitamine und Spurenminineralien.

18. Produkt gemäß einem der Ansprüche 1 bis 10 zur Verwendung in der Verbesserung der Tiergesundheit.

## Revendications

1. Produit alimentaire pour animaux acidifiant et antimicrobien, comprenant un coeur et un enrobage, le coeur comprenant un support poreux et au moins un acide et l'enrobage comprenant au moins un acide organique ou un sel, ester ou glycéride dudit ou desdits acides, dans lequel la valeur pKa d'au moins un acide du coeur est inférieure à la valeur pKa d'au moins un acide organique de l'enrobage.

2. Produit selon la revendication 1, dans lequel l'au moins un acide de coeur est plus fort que l'au moins un acide organique d'enrobage.

3. Produit selon la revendication 1 ou la revendication 2, dans lequel la valeur de pKa de l'acide du coeur est < 4.

4. Produit selon l'une quelconque des revendications 1 à 3, dans lequel la valeur de pKa de l'acide organique d'enrobage est > 4.

5. Produit selon l'une quelconque des revendications 1 à 4, dans lequel l'acide organique d'enrobage est choisi parmi, ou est une combinaison de, l'acide butyrique, l'acide sorbique, l'acide benzoïque, l'acide adipique, l'acide caprique et l'acide caparique.

6. Produit selon l'une quelconque des revendications 1 à 5, dans lequel l'acide du coeur est choisi parmi, ou est une combinaison de, l'acide phosphorique, l'acide formique, l'acide lactique, l'acide citrique et l'acide fumarique.

7. Produit selon l'une quelconque des revendications 1 à 6, lequel produit comprend 30 à 60 % en poids de support, 10 à 70 % en poids d'acide du coeur et 1 à 10 % en poids d'acide organique dans l'enrobage.

8. Produit selon l'une quelconque des revendications 1 à 7, dans lequel l'enrobage comprend en outre au moins un acide gras, de préférence un ou plusieurs acides gras à longue chaîne.

9. Produit selon l'une quelconque des revendications 1 à 8, dans lequel le support est la terre de diatomées.

10. Produit selon l'une quelconque des revendications 1 à 9, dans lequel le pH du coeur est inférieur à 4.

11. Procédé pour produire un produit alimentaire pour animaux acidifiant et antimicrobien selon l'une quelconque des revendications 1 à 10, consistant à :
disposer d'un support ;
ajouter audit support au moins un acide du coeur et une solution aqueuse d'un sel d'au moins un acide organique d'enrobage, d'un ester ou d'un glycéride dudit ou desdits acides ;
dans lequel la valeur de pKa d'au moins un acide du coeur est inférieure à la valeur de pKa d'au moins un acide organique d'enrobage.

12. Procédé pour produire un produit alimentaire pour animaux acidifiant et antimicrobien selon l'une quelconque des revendications 1 à 10, consistant à :
disposer d'un support ;
ajouter audit support au moins un acide du coeur et au moins un acide organique d'enrobage, ou un sel, ester ou glycéride dudit ou desdits acides et au moins un acide gras ;
dans lequel la valeur de pKa d'au moins un acide du coeur est inférieure à la valeur de pKa d'au moins un acide organique d'enrobage.

13. Procédé pour produire un produit alimentaire pour animaux acidifiant et antimicrobien selon l'une quelconque des revendications 1 à 10, consistant à :
disposer d'un support ;
ajouter audit support une poudre d'au moins un acide organique d'enrobage ou d'un sel, ester ou glycéride dudit acide ; et
ajouter au moins un acide du coeur sous forme liquide en présence d'eau ;
dans lequel la valeur de pKa d'au moins un acide de coeur est inférieure à la valeur de pKa d'au moins un acide organique d'enrobage.

14. Procédé pour produire un produit alimentaire pour animaux acidifiant et antimicrobien selon l'une quelconque des revendications 1 à 10, consistant à :
disposer d'un support ;
ajouter audit support une suspension, formée par mélange d'au moins un acide, ester ou glycéride d'enrobage organique solide, et d'au moins un acide de coeur liquide ;
dans lequel la valeur de pKa d'au moins un acide de coeur est inférieure à la valeur de pKa d'au moins un acide d'enrobage organique.

15. Utilisation d'un produit selon l'une quelconque des revendications 1 à 10 pour la conservation d'un aliment pour animaux.

16. Utilisation d'un produit selon l'une quelconque des revendications 1 à 10 pour améliorer la croissance d'un animal et l'utilisation d'un aliment pour animaux.

17. Prémélange contenant le produit selon l'une quelconque des revendications 1 à 10 et des vitamines et des oligoéléments.

18. Produit selon l'une quelconque des revendications 1 à 10 pour une utilisation dans l'amélioration de la santé d'un animal.
